# EUROPEAN PATENT SPECIFICATION

(11) **EP 0 390 406 B1**
(45) Date of publication and mention of the grant of the patent: **11.05.1994**
(21) Application number: 90303003.9
(22) Date of filing: 20.03.1990
(51) Int. Cl.: C03B 9/193, C03B 9/34, C03B 9/325

(54) **Neck ring/plunger assembly for a glassware forming machine**
Halsring/Plunger-Vorrichtung für eine Maschine zum Herstellen von Glasgegenständen
Assemblage d'anneau de bague/plongeur pour une machine de fabrication d'objets en verre

(30) Priority: 28.03.1989 US 329749
(43) Date of publication of application: 03.10.1990
(73) Proprietor: Emhart Glass Machinery Investments Inc., Wilmington, Delaware 19801 (US)
(72) Inventor: Douglas, Robert J., North Granby, Connecticut 06060 (US); Trahan, Albert J., Vernon, Connecticut 06086 (US)
(74) Representative: Randall, John Walter

(56) References cited:
- EP-A- 0 043 034
- EP-A- 0 336 657
- US-A- 4 662 928
- US-A- 4 888 040

## Description

The present invention relates to individual section glassware forming machines which form containers in the press and blow process, and more particularly, to the neck ring/plunger assembly of such machines which together form the neck portion of a container when a molten gob of glass is pressed into a parison or preform.

A neck ring and plunger assembly of generally conventional construction is shown in EP-A-336657. This comprises a neck ring assembly which has a stepped interior contour comprising a cylindrical portion having an upper surface and a lower enlarged annular portion. A guide ring is received in the neck ring assembly and has a stepped exterior contour including a cylindrical portion, which is received in the cylindrical portion of the neck ring assembly, having an upper surface and a lower, enlarged annular portion which is received in the lower enlarged annular portion of the neck ring assembly. The plunger assembly, which includes pressure exerting means in the form of a spring, moves a plunger through the neck ring assembly and the guide ring to form glass parisons.

While the parison is being formed, the outer surface of the neck portion is formed by cooperation between the neck ring assembly and the guide ring. The guide ring incurs substantial wear in use, which results in a gap appearing between the neck ring assembly and the guide ring resulting in the formation of an annular flange of glass extending outwardly from the neck portion of the parison. Such a flange (known as a flanged finish) is very undesirable, especially as it is susceptible to breakage, leaving a sharp surface.

It is one of the objects of the present invention to provide a neck ring and plunger assembly in which the formation of a flanged finish as a result of normal wear of the neck ring is avoided.

The present invention provides a neck ring and plunger assembly for use in a glassware forming machine, comprising a neck ring having a stepped interior contour comprising a cylindrical portion having an upper surface and a lower enlarged annular portion,
a guide ring having a stepped exterior contour including a cylindrical portion arranged to be received in the cylindrical portion of the neck ring and having an upper surface, and a lower enlarged annular portion arranged to be received in the annular portion of the neck ring,
a plunger assembly including pressure exerting means
characterized in that the height of the cylindrical portion of the neck ring is greater than the height of the cylindrical portion of the guide ring by an amount (Z) and the pressure exerting means acts on the guide ring to urge the upper surface of the guide ring into engagement with the upper surface of the neck ring, thus to ensure these surfaces are maintained in engagement as the surface wears.

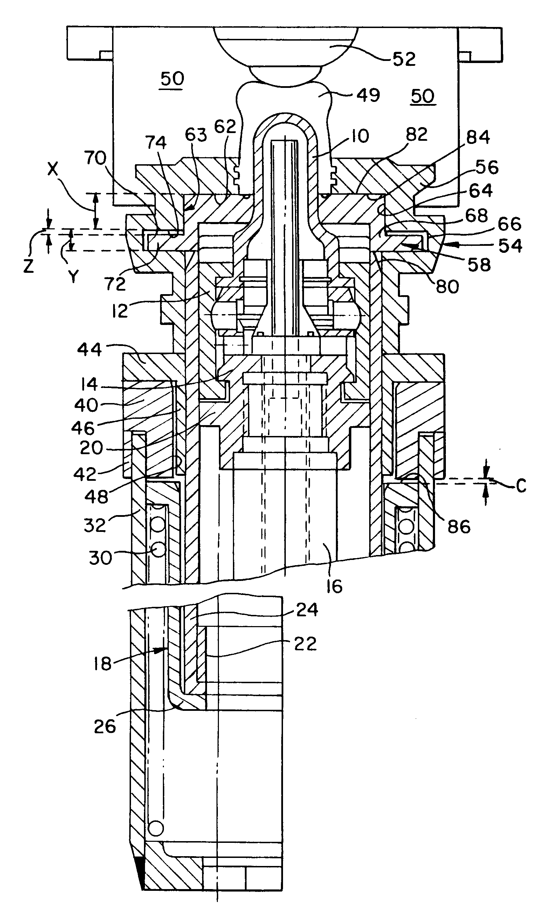

The sole figure is an axial cross-sectional view of a neck ring/plunger assembly illustrating the present invention.

The plunger assembly includes a plunger 10 which is secured to a plunger holder 12, a plunger mounting adapter 14 which is connected to a vertically reciprocating piston 16 and a kickback basket assembly 18. When the piston 16, and hence, the plunger 10 is lowered, the lower surface of an adapter annular support collar 20 engages a spacer 22 which is supported at the bottom of a centering sleeve 24 of the kickback basket assembly 18. Further downward displacement results in the centering sleeve 24 forcing a kickback basket 26 down compressing a spring 30. The top of a spring retainer 32 is defined by a plunger assembly cap 40 which is secured to a retainer plate 42. A float cover 44 having a depending central collar 46 is located on top of the cap 40 with the collar 46 being located within the central opening 48 in the cap. A complete description of the plunger assembly is disclosed in U.S. Patent 4836839.

To form a parison 49, a mold cavity is defined with a pair of opposed side molds 50, an end mold 52 and a pair of opposed neck ring assemblies 54 each having a neck ring 56 and a guide ring 58 for forming the outer surface of the neck portion of the parison 49. Each neck ring 56 has a stepped interior contour 62, comprising a cylindrical portion 63 which is bounded at the top defining an upper surface 84 and has a first height X, and a lower, enlarged annular portion 66 which has an annular top surface 74 which extends to the cylindrical portion 63 and has a second height Y. The guide ring 58 has a stepped exterior contour 68 which is to be received by the stepped contour 62 of the neck ring 56. The guide ring 58 has a cylindrical top portion 64 having an upper surface 82 which engages the upper surface 84 of the neck ring interior contour 62 and has lower enlarged annular portion 72 which is received by the neck ring annular portion 66. While the total height of this guide ring stepped exterior contour 68 corresponds to the total height (X + Y) of the stepped interior contour 62, an upper surface 70 of the annular portion 72 of the guide ring is defined to establish a selected clearance Z with the top surface 74 of the lower portion 66 of the neck ring interior contour.

As illustrated, an upper beveled surface 80 of the centering sleeve 24 is forcefully pushed upwardly against the guide ring 58, thereby forcing the upper surface 82 of the guide ring against the corresponding neck ring surface 84. Since another annular clearance C, at least as large as clearance Z, is defined between a top 86 of the kickback basket 26 and the cap 40, as the upper surface 82 of the guide ring wears, the kickback spring 30 will urge the kickback basket 26, and hence, the centering sleeve 24 upwardly. The sleeve 24 will, accordingly, continue to force the guide ring 58 upwardly into engagement with the neck ring 56 until clearance Z is eliminated. By maintaining these surfaces in forceful engagement throughout prolonged machine operation, the formation of a flanged finish which normally results from the separation of these two surfaces when the upper surface 82 of the guide ring wears, can be prevented.

## Claims

1. A neck ring and plunger assembly for use in a forming machine, comprising a neck ring (56) having a stepped interior contour comprising a cylindrical portion (63) having an upper surface (84) and a lower enlarged annular portion (66),
a guide ring (58) having a stepped exterior contour including a cylindrical portion (64) arranged to be received in the cylindrical portion (63) of the neck ring and having an upper surface (82), and a lower enlarged annular portion (72) arranged to be received in the annular portion (66) of the neck ring,
a plunger assembly including pressure exerting means (30)
characterized in that the height of the cylindrical portion (64) of the guide ring (58) is greater than the height of the cylindrical portion (63) of the neck ring (56) by an amount (Z) and the pressure exerting means (30) acts on the guide ring (58) to urge the upper surface (82) of the guide ring (58) into engagement with the upper surface (84) of the neck ring (56), thus to ensure these surfaces are maintained in engagement as the surface (82) wears.

2. A neck ring and plunger assembly according to claim 1 wherein the plunger assembly comprises axially displaceable plunger means (16), and centering sleeve means (24) for guiding the axial displacement of the plunger means (16) and received in a central bore (53) of the neck ring assembly (56)
characterized in that the sleeve means (24) is urged by the pressure exerting means (3) in the form of a spring against the guide ring (58) thus to urge the surface (82) of the guide ring into engagement with the surface (84) of the neck ring assembly.

## Patentansprüche

1. Kragenring- und Plungeranordnung zur Verwendung in einer Formmaschine, die aufweist:
- einen Kragenring (56) mit einer abgestuften innerenKontur, die einen zylindrischen Abschnitt (63) mit einer oberen Oberfläche (84) und einem unteren vergrößerten ringförmigen Abschnitt (66) aufweist,
- einen Führungsring (58) mit einer abgestuften äußeren Kontur, der einen zylindrischen Abschnitt (64) aufweist, der angeordnet ist, um in dem zylindrischen Abschnitt (63) des Kragenringes aufgenommen zu werden, und der eine obere Oberfläche (82) und einen unteren vergrößerten ringförmigen Abschnitt (72) hat, der angeordnet ist, um in dem ringförmigen Abschnitt (66) des Kragenringes aufgenommen zu werden,
- eine Plungeranordnung, die eine Einrichtung (30) zum Druckausüben aufweist,
dadurch gekennzeichnet, daß die Höhe des zylindrischen Abschnittes (64) des Führungsringes (58) um eine Größe (Z) größer als die Höhe des zylindrischen Abschnittes (63) des Kragenringes (56) ist und die Einrichtung (30) zum Druckausüben auf den Führungsring (58) wirkt, um die obere Oberfläche (82) des Führungsringes (58) in Eingriff mit der oberen Oberfläche (84) des Kragenringes (56) zu zwingen, um so zu sichern, daß diese Oberflächen in Eingriff gehalten werden, wenn die Oberfläche (82) verschleißt.

2. Kragenring- und Plungeranordnung gemäß Anspruch 1, wobei die Plungeranordnung eine axial verschiebbare Plungereinrichtung (16) und eine Zentriermuffeneinrichtung (24) zum Führen der axialen Verschiebung der Plungereinrichtung (16) aufweist und in einer zentralen Bohrung (53) der Kragenringanordnung (56) aufgenommen ist,
dadurch gekennzeichnet, daß die Muffeneinrichtung (24) durch die Einrichtung (30) in der Form einer Feder zum Druckausüben gegen den Führungsring (58) gedrückt wird, um so die Oberfläche (82) des Führungsringes in Eingriff mit der Oberfläche (84) der Kragenringanordnung zu drücken.

## Revendications

1. Ensemble moule de bague et plongeur destiné à être utilisé dans une machine à mouler du verre, qui comprend un moule de bague (56) ayant un profil intérieur échelonné comprenant lui-même une partie cylindrique (63) ayant une surface supérieure (84) et une partie inférieure annulaire agrandie (66), une bague de guidage (58) ayant un profil extérieur échelonné qui comprend une partie cylindrique (64) agencée pour se loger dans la partie cylindrique (63) du moule de bague et ayant une surface supérieure (82), et une partie annulaire élargie inférieure (72) agencée pour se loger dans la partie annulaire (66) du moule de bague, et un ensemble plongeur comprenant des moyens (30) exerçant une pression, et qui est caractérisé en ce que la hauteur de la partie cylindrique (64) de la bague de guidage (58) est supérieure d'une quantité (Z) à la hauteur de la partie cylindrique (63) du moule de bague, et les moyens exerçant une pression agissent sur la bague de guidage (58) pour tendre à mettre la surface supérieure (82) de la bague de guidage (58) en contact avec la surface supérieure (84) du moule de bague (56), pour faire ainsi en sorte que ces surfaces soient maintenues en contact lorsque la surface s'use.

2. Ensemble moule de bague et plongeur selon la revendication 1, dans lequel l'ensemble plongeur comprend des moyens (16) formant plongeur, qui peuvent se déplacer axialement, et des moyens (24) formant manchon de centrage, servant à guider le déplacement axial des moyens (16) formant plongeur et qui sont logés dans un alésage central (53) de l'ensemble moule de bague (56), caractérisé en ce que les moyens (24) formant manchon sont appliqués par les moyens (3) exerçant une pression, constitués par un ressort, contre la bague de guidage (58) pour tendre de cette façon à appliquer la surface (82) de la bague de guidage en contact avec la surface (84) de l'ensemble moule de bague.
